# EUROPEAN PATENT APPLICATION

(11) **EP 3 133 496 A1**
(43) Date of publication of application: **22.02.2017**
(21) Application number: 16178276.8
(22) Date of filing: 06.07.2016
(51) Int. Cl.: G06F 12/0866, G06F 3/06

(54) **CACHE-AWARE BACKGROUND STORAGE PROCESSES**

(30) Priority: 17.08.2015 US 201562205781 P; 27.06.2016 US 201615193147
(71) Applicant: Strato Scale Ltd., 4673314 Herzliya (IL)
(72) Inventor: Traeger, Avishay, Modi'in (IL)
(74) Representative: Beck Greener

(57) **Abstract**

A system (20) for data storage includes one or more storage devices (36, 52), a cache memory (40, 60), and one or more processors (32, 50). The processors are configured to store data in the storage devices, to cache part of the stored data in the cache memory, and to apply a background maintenance process to at least some of the data stored in the storage devices, including modifying the background maintenance process depending on the part of the data that is cached in the cache memory.

## Description

The present invention relates generally to data storage, and particularly to methods and systems for cache-aware background storage.

Computing systems often apply background maintenance processes to data that they store in non-volatile storage devices. Such background processes may comprise, for example, scrubbing, garbage collection or compaction, deduplication, replication and collection of statistics.

According to an aspect of the present invention, there is provided a system for data storage comprising one or more storage devices, a cache memory, and one or more processors. The processors are configured to store data in the storage devices, to cache part of the stored data in the cache memory, and to apply a background maintenance process to at least some of the data stored in the storage devices, including modifying the background maintenance process depending on the part of the data that is cached in the cache memory.

In some embodiments, the processors are configured to notify a first background maintenance process of a data item that was accessed by a second background maintenance process, and to apply the first background maintenance process using a cached version of the data item. In some embodiments, the processors are configured to modify the background maintenance process by detecting that a data item is present in the cache memory, and in response prioritizing processing of the data item relative to other data items that are not present in the cache memory.

In some embodiments, the processors are configured to apply the background maintenance process by scrubbing data items stored in the storage devices, and to modify the background maintenance process by refraining from scrubbing a data item in the storage devices, in response to detecting that the data item is present in the cache memory. In some embodiments, the processors are configured to apply the background maintenance process by de-fragmenting data items stored in the storage devices based on metadata, and to modify the background maintenance process by reading at least part of the metadata from the cache memory instead of from the storage devices.

In some embodiments, the processors are configured to apply the background maintenance process by de-duplicating data items stored in the storage devices, and to modify the background maintenance process by reading one or more of the data items from the cache memory instead of from the storage devices. In embodiments, the processors are configured to apply the background maintenance process by collecting statistical information relating to data items stored in the storage devices, and to modify the background maintenance process by reading one or more of the data items from the cache memory instead of from the storage devices.

In some embodiments, the processors are configured to apply the background maintenance process by replicating data items stored in the storage devices to secondary storage, and to adapt an eviction policy, which selects data items for eviction from the cache memory, depending on replication of the data items. In embodiments, the processors are configured to defer eviction of a data item in response to detecting that the data item is about to be replicated. In a disclosed embodiment, the processors are configured to defer eviction of a data item from the cache memory in response to detecting that the data item is about to be processed by the background maintenance process.

According to another aspect of the present invention, there is provided a method for data storage including storing data in one or more storage devices; caching part of the stored data in a cache memory; and applying a background maintenance process to at least some of the data stored in the storage devices, including modifying the background maintenance process depending on the part of the data that is cached in the cache memory.

In some embodiments, applying the background maintenance process comprises notifying a first background maintenance process of a data item that was accessed by a second background maintenance process, and applying the first background maintenance process using a cached version of the data item. In some embodiments, modifying the background maintenance process comprises, in response to detecting that a data item is present in the cache memory, prioritizing processing of the data item relative to other data items that are not present in the cache memory.

According to yet another aspect of the present invention, there is provided a computer software product, the product including a tangible non-transitory computer-readable medium in which program instructions are stored, which instructions, when read by one or more processors, cause the processors to store data in one or more storage devices, to cache part of the stored data in a cache memory, and to apply a background maintenance process to at least some of the data stored in the storage devices, including modifying the background maintenance process depending on the part of the data that is cached in the cache memory.

The present invention will be more fully understood from the following detailed description of the embodiments thereof, taken together with the drawings in which:
Fig. 1 is a block diagram that schematically illustrates a computing system, in accordance with an embodiment of the present invention;
Fig. 2 is a flow chart that schematically illustrates a method for cache-aware scrubbing, in accordance with an embodiment of the present invention;
Fig. 3 is a flow chart that schematically illustrates a method for cache-aware garbage collection, in accordance with an embodiment of the present invention;
Fig. 4 is a flow chart that schematically illustrates a method for cache-aware deduplication and statistics collection, in accordance with an embodiment of the present invention; and
Fig. 5 is a flow chart that schematically illustrates a method for coordinated replication and cache eviction, in accordance with an embodiment of the present invention.

Embodiments of the present invention that are described hereinbelow provide improved methods and systems for performing background maintenance processes relating to data storage in computing systems.

In some embodiments, a computing system stores data in one or more storage devices, and caches part of the stored data in a cache memory. During operation, the computing system applies a background maintenance process to at least some of the data that is stored in the storage devices. The background maintenance process may comprise, for example, scrubbing, garbage collection (also referred to as de-fragmentation or compaction), offline deduplication, asynchronous replication, or collection of storage statistics.

In the disclosed embodiments, the background maintenance process is *cache-aware,* in the sense that the computing system modifies the background maintenance process depending on the part of the data that is cached in the cache memory.

Various examples of performing background maintenance processes in a cache-aware manner are described herein. In some of the disclosed techniques, different background maintenance processes share cached data, or information relating to the cached data, with one another in order to improve performance.

By being cache-aware, the disclosed techniques reduce unnecessary access to the storage devices, and thus improve the computing system performance and extend the lifetime of the storage devices.

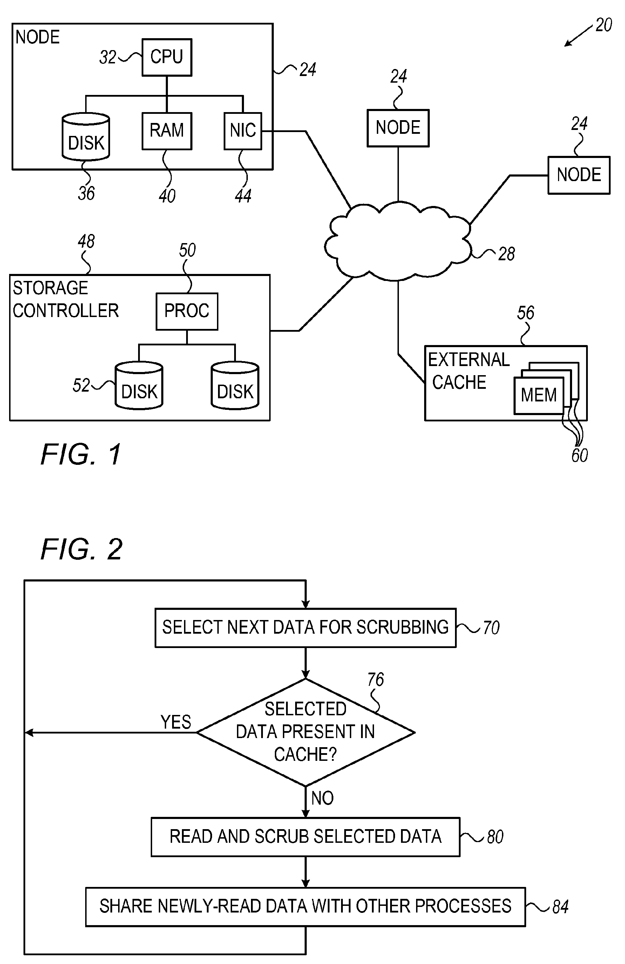

Fig. 1 is a block diagram that schematically illustrates a computing system 20, in accordance with an embodiment of the present invention. System 20 may comprise, for example, a data center, a cloud computing system, a High-Performance Computing (HPC) system or any other suitable system.

System 20 comprises multiple compute nodes 24, referred to simply as "nodes" for brevity. Nodes 24 typically comprise servers, but may alternatively comprise any other suitable type of compute nodes. System 20 may comprise any suitable number of nodes, either of the same type or of different types.

Nodes 24 are connected to one another by a communication network 28, typically a Local Area Network (LAN). Network 28 may operate in accordance with any suitable network protocol, such as Ethernet or Infiniband.

Each node 24 comprises a Central Processing Unit (CPU) 32. Depending on the type of compute node, CPU 32 may comprise multiple processing cores and/or multiple Integrated Circuits (ICs). Regardless of the specific node configuration, the processing circuitry of the node as a whole is regarded herein as the node CPU. Each node 24 comprises a volatile memory, in the present example a Random Access Memory (RAM) 40.

Each node 24 further comprises a Network Interface Controller (NIC) 44 for communicating with network 28. In some embodiments a node may comprise two or more NICs that are bonded together, e.g., in order to enable higher bandwidth. This configuration is also regarded herein as an implementation of NIC 44.

Some of nodes 24 (but not necessarily all nodes) may comprise one or more non-volatile storage devices 36, e.g., magnetic Hard Disk Drives - HDDs - or Solid State Drives - SSDs. Additionally or alternatively, system 20 may comprise non-volatile storage devices that are external to nodes 24. For example, system 20 of Fig. 1 comprises a storage controller 48 that comprises multiple disks 52 (e.g., HDDs or SSDs) managed by a processor 50. Storage controller 48 typically comprises a suitable NIC (not shown) for communicating with nodes 24 over network 28.

In some embodiments, some of the data stored in the non-volatile storage devices is also cached in cache memory in order to improve performance. In an embodiment, cache memory is allocated in RAM 40 of one or more of nodes 24. Additionally or alternatively, system 20 may comprise cache memory that is external to nodes 24. For example, system 20 of Fig. 1 comprises an external cache 56, which comprises volatile memory devices 60. Cache 56 typically comprises a suitable NIC (not shown) for communicating with nodes 24 over network 28, and a suitable processor (not shown) for managing caching in memory devices 60.

The system configuration shown in Fig. 1 is an example configuration that is chosen purely for the sake of conceptual clarity. In alternative embodiments, any other suitable configuration can be used. In the present context, any and all processors and/or controllers in the system, e.g., CPUs 32, processor 50 and/or a processor of external cache 56, are referred to simply as "processors." Any and all persistent storage devices, e.g., disks 36 in nodes 36 and/or disks 52 in storage controller 48, are referred to simply as "storage devices."

Furthermore, any and all memory devices, or regions within memory devices, which are used for caching data, are referred to simply as "cache memories." In various embodiments, caching may be performed in volatile or non-volatile memory, such as, for example, internal CPU memory, RAM of a local node or of a remote node (remote from the node in which the data is produced), SSD of a local node or of a remote node, or any other suitable memory.

In alternative embodiments, the disclosed techniques can also be used with storage devices that are not necessarily non-volatile. For example, a local RAM can be used as cache memory for a remote RAM. In such a configuration the remote RAM plays the role of a storage device. Further alternatively, the disclosed techniques can be applied in any configuration of one or more processors, one or more storage devices, and one of more cache memories.

The various elements of system 20 may be implemented using hardware/firmware, such as in one or more Application-Specific Integrated Circuit (ASICs) or Field-Programmable Gate Array (FPGAs). Alternatively, some system elements may be implemented in software or using a combination of hardware/firmware and software elements. In various embodiments, any of the processors may comprise general-purpose processors, which are programmed in software to carry out the functions described herein. The software may be downloaded to the processors in electronic form, over a network, for example, or it may, alternatively or additionally, be provided and/or stored on non-transitory tangible media, such as magnetic, optical, or electronic memory.

As noted above, the disclosed techniques can be performed in any system configuration having one or more processors, one or more storage devices and one or more cache memories. The description that follows refers simply to a processor, a storage device and a cache memory, for the sake of clarity.

In some embodiments, the processor applies one or more background maintenance processes to the data stored in the storage devices. Background maintenance processes may comprise, for example, scrubbing, Garbage collection, offline deduplication, asynchronous replication and/or collection of storage statistics.

A scrubbing process aims to verify whether the data stored on the storage devices is still readable, especially data that was not accessed for a long period of time. The scrubbing process also refreshes data when appropriate, e.g., by reading and rewriting it. A typical scrubbing process scans the data stored on the storage devices periodically, and reads and re-writes the data.

A garbage collection process, also referred to as de-fragmentation or compaction, scans the data stored on the storage devices, removes data that is obsolete or invalid, and attempts to optimize the storage locations of the data on the storage devices for better access. Typically, the garbage collection process attempts to rearrange the stored data in large contiguous blocks, i.e., to reduce fragmentation of the data.

An offline deduplication process attempts to identify and discard duplicate copies of data items on the storage devices. When a duplicate is found, the deduplication process typically replaces it with a pointer to an existing copy. A typical deduplication process calculates checksums (e.g., hash values or CRC) of data items, and identifies duplicate data items by comparing the checksums.

An asynchronous replication process copies data from a storage device to some secondary storage device, in order to provide resilience to failures and disaster events. A typical replication process replicates the data in accordance with some predefined policy, e.g., periodically every N minutes.

A statistics collection process reads data from the storage devices in order to collect statistical parameters of interest relating to the stored data. Statistical parameters may comprise, for example, estimates of the average compression ratio.

Additionally or alternatively, the processor may carry out one or more of the above background maintenance processes, and/or any other suitable background maintenance process.

In some embodiments, the processor carries out a background maintenance process in a cache-aware manner, e.g., by utilizing cached data instead of stored data when possible, by prioritizing processing of data items that are found in the cache relative to data items not present in the cache, or otherwise modifying the process depending on the data present in the cache. The processor typically adds data to the cache as a result of read or write operations performed by the "data path," e.g., by user applications. Data may also be added to the cache when it is accessed by some background maintenance process. In either case, background maintenance processes can access the cached data instead of stored data and thus improve performance. In the present context, cached metadata is also regarded as a kind of cached data.

Figs. 2-5 below illustrate several cache-aware background processes. These processes are depicted purely by way of example, in order to demonstrate how storage performance can be improved by carrying out cache-aware background processes. In alternative embodiments, any other suitable background maintenance process may be carried out by utilizing cached data, and/or by sharing cached data or information regarding cached data with other background processes.

Fig. 2 is a flow chart that schematically illustrates a method for cache-aware scrubbing, in accordance with an embodiment of the present invention. In this example, the processor refrains from scrubbing certain data stored on the storage device, if this data is also present in the cache. The assumption is that the data is found in the cache because it was accessed recently, and therefore there is no need to scrub it. Selective scrubbing of this sort reduces unnecessary access to the storage devices.

The method of Fig. 2 begins with the processor selecting the next chunk of stored data to be scrubbed, at a scrubbing selection step 70. At a scrub checking step 74, the processor checks whether the selected data is present in the cache memory. If the data exists in the cache, the processor skips the data and does not scrub it. The method then loops back to step 70 in which the processor proceeds to select the next data chunk to be scrubbed. Only if the data chunk in question is not found in the cache memory, the processor reads and scrubs the data, at a scrubbing step 80.

Optionally, the processor shares the newly-read data with one or more other background processes, at a sharing step 84. The method then loops back to step 70. Sharing step 84 relieves other background processes of the need to read the data from the storage device. The processor may use any suitable protocol or data structure for making data that was read by one background process available to another background process. In an embodiment, such a protocol or data structure is separate from the cache memory.

In one example embodiment, as part of the scrubbing process, the processor records the time at which each data chunk on the storage devices was checked. Any suitable metadata structure can be used for this purpose. The processor may update the metadata in response to accesses to the data by the data path and/or by other background maintenance processes, not only by the scrubbing process itself. This updating will prevent the scrubbing process from unnecessarily reading data that does not require scrubbing. This updating mechanism may be implemented, for example, by the data path notifying the scrubbing process of each read and write operation.

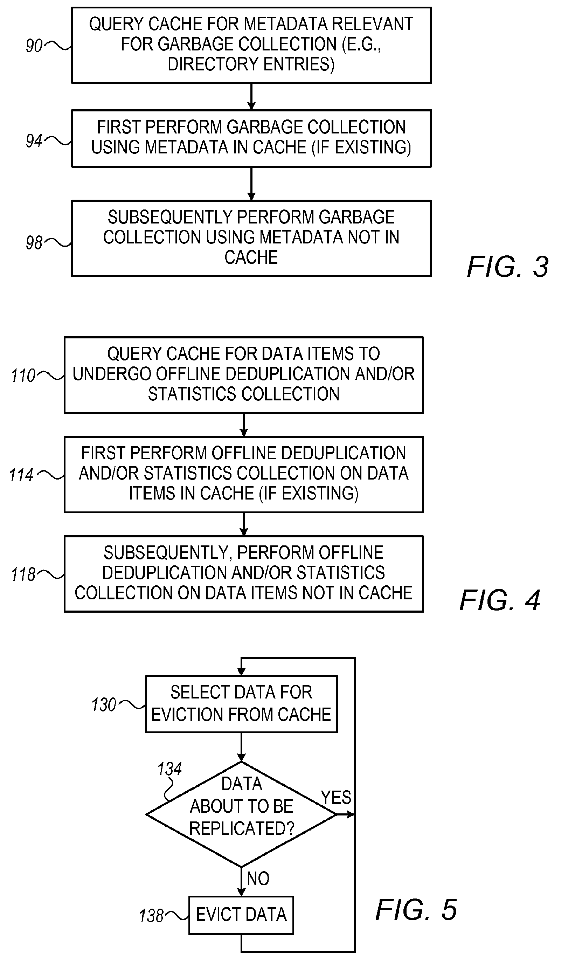

Fig. 3 is a flow chart that schematically illustrates a method for cache-aware garbage collection, in accordance with an embodiment of the present invention. In this example, the processor distinguishes between valid data (to be de-fragmented) and invalid data (to be erased) using metadata that is stored on the storage devices. The metadata may comprise, for example, directory entries, file allocation tables or any other suitable type of metadata.

When some of the relevant metadata is present in the cache memory, the processor performs garbage collection using the cached metadata first, and only then proceeds to perform garbage collection using the metadata not found in the cache. The rationale behind this prioritization is that cached metadata may disappear from the cache at a later time, and therefore should be processed first as long as it is available. In this manner, unnecessary access to the storage devices is reduced.

The method begins with the processor querying the cache memory for metadata that is relevant for garbage collection, at a querying step 90. In one example embodiment, each cache memory in the system exposes a suitable Application Programming Interface (API) that enables processes to list the data available in the cache and get data from the cache. The processor may use this API for querying the cache memory.

At a cached-metadata garbage collection step 94, the processor first performs garbage collection using the metadata found in the cache memory (if any). Then, at a stored-metadata garbage collection step 98, the processor performs garbage collection using the metadata that is found only on the storage devices and is not present in the cache memory.

The process of Fig. 3 is typically performed continuously, e.g., periodically, and aims to gradually de-fragment all data stored on the storage devices.

Fig. 4 is a flow chart that schematically illustrates a method for cache-aware offline deduplication and/or statistics collection, in accordance with an embodiment of the present invention. The method flow is described jointly for deduplication and statistics collection, for brevity. In alternative embodiments, this flow can be used for performing only deduplication or only statistics collection.

In both deduplication and statistics collection, it is advantageous for the processor to give high priority to accessing data in the cache memory, and revert to data on the storage devices later. In this manner, the processor is able to access newly-created data while it still exists in the cache, and avoid unnecessary access to the storage devices.

The method begins with the processor querying the cache memory for data items that are to undergo offline deduplication and/or statistics collection, at a cache querying step 110. As explained above, the processor may use a suitable API exposed by the cache memory for this purpose.

At a cache processing step 114, the processor first performs offline deduplication and/or statistics collection on the data items found in the cache memory (if any). In garbage collection, processing the data typically involves calculating checksums over the data, comparing the calculated checksums to existing checksums, and discarding data identified as duplicate. In statistics collection, processing the data typically involves extracting the parameters of interest (e.g., compression ratio) from the data, and adding the extracted parameters to the collected statistics.

Then, at a storage processing step 118, the processor performs offline deduplication and/or statistics collection on data items that are found only on the storage devices and are not present in the cache memory. The process of Fig. 4 is typically performed continuously, e.g., periodically.

Fig. 5 is a flow chart that schematically illustrates a method for coordinated replication and cache eviction, in accordance with an embodiment of the present invention. In the present example, the processor evicts data from the cache in accordance with some eviction policy. Two example policies are "Least Recently Used" (LRU - a policy that evicts data that was not accessed recently), and "Least Frequently Used" (LFU - a policy that evicts data that is accessed rarely).

In some embodiments, the processor coordinates between the eviction policy and a replication process that replicates data to secondary storage. Typically, the processor attempts to replicate data by reading its cached version from the cache, rather than reading the data from the storage device. In order to increase the likelihood of finding the data for replication in the cache, the processor refrains from evicting data that is expected to be replicated shortly.

The method of Fig. 5 begins with the processor selecting the next data to be evicted from the cache in accordance with the applicable eviction policy, at an eviction selection step 130. At an eviction checking step 134, the processor checks whether the selected data is expected to be replicated in the next M seconds. The value of M may depend on the replication policy.

If the data selected for eviction is expected to be replicated shortly, the processor defers the eviction of this data (e.g., refrains from evicting or at least delays the eviction) and the method loops back to step 130 for re-selecting data for eviction. If the selected data is not expected to be replicated soon, the processor evicts the data from the cache, at an eviction step 138. The method then loops back to step 130.

The method of Fig. 5 can be generalized to coordinate the cache eviction policy with any other background maintenance process. In an example embodiment, the background maintenance processes notify the cache eviction policy as soon as it completes processing a data chunk (and thus do not expect to process it again in the near future). The cache eviction policy may consider these notification in deciding which data to evict and which data to retain. For example, data that is not expected to be accessed soon by any background process can be given high priority for eviction.

As noted above, the methods of Figs. 2-5 are example methods that are chosen purely for the sake of conceptual clarity. In alternative embodiments, the processor may carry out any other suitable background maintenance process by utilizing cached data.

Additionally or alternatively, the processor may share cached data or information regarding cached data between different background maintenance processes. For example, when a first background maintenance process (e.g., scrubbing) has read certain data into the cache memory, the processor may notify a second background maintenance process (e.g., garbage collection) that this data is present in the cache. In response to this notification, the second background maintenance process can decide to access the data in question in the cache instead of in the storage device. The second process may also use the notification to give high priority to processing this particular data, because it is now temporarily present in the cache and may not be found there later.

Coordination between background maintenance processes is sometimes highly effective, e.g., when different processes aim to process the same data. For example, both the scrubbing process and the garbage collection process attempt to find data that was not accessed recently. As such, coordinating and sharing cached data between these processes can reduce disk access considerably.

Generally, the background maintenance processes described herein can use any suitable method for checking which data is present in the cache. As noted above, in some embodiments each cache memory exposes an Application Programming Interface (API) that enables processes to list the data available in the cache and get data from the cache. The background maintenance processes may use this API when carrying out the disclosed techniques. Alternatively, any other suitable technique can be used.

It will be appreciated that the embodiments of the present invention have been described by way of example and that they are not limited to what has been particularly shown and described hereinabove. Rather, combinations and subcombinations of the various features described hereinabove, as well as variations and modifications thereof which would occur to persons skilled in the art upon reading the foregoing description and which are not disclosed in the prior art may be made to the examples described within the scope of the appending claims.

## Claims

1. A system (20) for data storage, comprising:
one or more storage devices (36, 52);
a cache memory (40, 60); and
one or more processors (32, 50), which are configured to store data in the storage devices, to cache part of the stored data in the cache memory, and to apply a background maintenance process to at least some of the data stored in the storage devices, including modifying the background maintenance process depending on the part of the data that is cached in the cache memory.

2. The system according to claim 1, wherein the processors are configured to notify a first background maintenance process of a data item that was accessed by a second background maintenance process, and to apply the first background maintenance process using a cached version of the data item.

3. The system according to claim 1 or 2, wherein the processors are configured to modify the background maintenance process by detecting that a data item is present in the cache memory, and in response prioritizing processing of the data item relative to other data items that are not present in the cache memory.

4. The system according to any preceding claim, wherein the processors are configured to apply the background maintenance process by scrubbing data items stored in the storage devices, and to modify the background maintenance process by refraining from scrubbing a data item in the storage devices, in response to detecting that the data item is present in the cache memory.

5. The system according to any preceding claim, wherein the processors are configured to apply the background maintenance process by de-fragmenting data items stored in the storage devices based on metadata, and to modify the background maintenance process by reading at least part of the metadata from the cache memory instead of from the storage devices.

6. The system according to any preceding claim, wherein the processors are configured to apply the background maintenance process by de-duplicating data items stored in the storage devices, and to modify the background maintenance process by reading one or more of the data items from the cache memory instead of from the storage devices.

7. The system according to any preceding claim, wherein the processors are configured to apply the background maintenance process by collecting statistical information relating to data items stored in the storage devices, and to modify the background maintenance process by reading one or more of the data items from the cache memory instead of from the storage devices.

8. The system according to any preceding claim, wherein the processors are configured to apply the background maintenance process by replicating data items stored in the storage devices to secondary storage, and to adapt an eviction policy, which selects data items for eviction from the cache memory, depending on replication of the data items.

9. The system according to claim 8, wherein the processors are configured to defer eviction of a data item in response to detecting that the data item is about to be replicated.

10. The system according to any preceding claim, wherein the processors are configured to defer eviction of a data item from the cache memory in response to detecting that the data item is about to be processed by the background maintenance process.

11. A method for data storage, comprising:
storing data in one or more storage devices (36, 52);
caching part of the stored data in a cache memory (40, 60); and
applying a background maintenance process to at least some of the data stored in the storage devices, including modifying the background maintenance process depending on the part of the data that is cached in the cache memory.

12. The method according to claim 11, wherein applying the background maintenance process comprises notifying a first background maintenance process of a data item that was accessed by a second background maintenance process, and applying the first background maintenance process using a cached version of the data item.

13. The method according to claim 11 or 12, wherein modifying the background maintenance process comprises, in response to detecting that a data item is present in the cache memory, prioritizing processing of the data item relative to other data items that are not present in the cache memory.

14. A computer software product, the product comprising a tangible non-transitory computer-readable medium in which program instructions are stored, which instructions, when read by one or more processors (32, 50), cause the processors to store data in one or more storage devices (36, 52), to cache part of the stored data in a cache memory (40, 60), and to apply a background maintenance process to at least some of the data stored in the storage devices, including modifying the background maintenance process depending on the part of the data that is cached in the cache memory.
